# DEMANDE DE BREVET EUROPEEN

(11) **EP 2 993 632 A1**
(43) Date de publication de la demande: **09.03.2016**
(21) Numéro de dépôt: 15184144.2
(22) Date de dépôt: 07.09.2015
(51) Int. Cl.: G06Q 10/08, G06K 7/10

(54) **SUIVI D'OBJETS EMBARQUES DANS UNE UNITE DE TRANSPORT**

(30) Priorité: 05.09.2014 FR 1458316
(71) Demandeur: Geocolis, 76250 deville-les-Rouen (FR)
(72) Inventeur: GRENIER, Olivier, 76116 Martainville (FR); VERNA, Alain, 76370 Martin Eglise (FR); LE BIHAN, Pierre-Yves, 92800 Puteaux (FR); MATHIEU, Stéphane, 94120 Fontenay sous Bois (FR); DOUBREMELLE, Denis, 76520 Boos (FR); BAERT, Jean-Michel, 27370 Thuit Signol (FR)
(74) Mandataire: Gendron, Vincent Christian

(57) **Abrégé**

Un système de suivi (1) d'un jeu d'objets (100) embarqués dans une unité de transport (101), comprenant
des dispositifs marqueurs (200), comprenant chacun une alimentation, une mémoire pour stocker un identifiant d'objet, des moyens de communication sans fil courte portée, et aptes à sortir d'un mode d'économie d'énergie suite à la réception d'un signal radioélectrique basses fréquences,
un dispositif lecteur (300) monté sur l'unité de transport, pour recevoir des données de présence issues des dispositifs marqueurs,
un dispositif de localisation (300), monté sur l'unité de transport, pour recevoir des données de localisation de l'unité de transport issues d'un système de géolocalisation, et
des moyens de traitement (300) agencés pour comparer des données de présence attendues, fonction des données de localisation reçues, aux données de présence et pour émettre un signal d'alarme selon le résultat de la comparaison.

## Description

La présente invention se rapporte au suivi d'objets embarqués dans une unité de transport, notamment un camion de transport routier.

Classiquement, la traçabilité des marchandises embarquées dans une unité de transport est assurée en comparant les objets embarqués au contenu d'une liste de colisage, lors du chargement et du déchargement.

Le document WO 2007/049011 décrit un dispositif de suivi comprenant une alimentation, une antenne pour communiquer avec un système de géolocalisation, une antenne pour communiquer avec un réseau de téléphonie mobile et un microcontrôleur en communication avec les antennes. Ce dispositif est monté sur l'objet à suivre. Le suivi d'un jeu d'objets est donc assuré par un jeu de dispositifs de suivi correspondants à ces objets.

Il existe un besoin pour un suivi assuré par des moyens plus simples.

Il est proposé un système de suivi d'un jeu d'objets embarqués dans une unité de transport, comprenant
- un jeu de dispositifs marqueurs, chaque dispositif marqueur étant destiné à être monté sur un objet correspondant et comprenant une alimentation, une mémoire pour stocker un identifiant de cet objet, des moyens de communication sans fil courte portée pour transmettre des données de présence élaborées en fonction de l'identifiant, et dans lequel chaque dispositif marqueur est conçu pour sortir d'un mode d'économie d'énergie lorsque ledit dispositif marqueur reçoit un signal radioélectrique basses fréquences transmis suivant un mode de propagation magnétique, et
- un dispositif lecteur, destiné à être monté sur l'unité de transport, ledit dispositif lecteur comprenant des moyens de communication sans fil courte portée pour recevoir les données de présence issues des dispositifs marqueurs, chaque dispositif marqueur étant conçu pour communiquer uniquement avec le dispositif lecteur,
- un dispositif de localisation, destiné à être monté sur l'unité de transport, comprenant des moyens de communication sans fil longue portée pour recevoir des données de localisation de l'unité de transport issues d'un système de géolocalisation,

- un dispositif de communication sans fil longue portée avec un réseau étendu WAN, et
- des moyens de traitement en communication avec le dispositif lecteur, avec le dispositif de communication et avec le dispositif de localisation, agencés pour comparer des données de présence attendues, avantageusement fonction des données de localisation reçues, aux données de présence issues des dispositifs marqueurs et pour émettre un signal d'alarme selon le résultat de la comparaison.

Le mode d'économie d'énergie peut être un mode de veille profonde, de veille légère, ou autre. L'invention n'est limitée par le fonctionnement de ce mode d'économie d'énergie que dans la mesure où il permet une consommation d'énergie moindre que le mode de fonctionnement normal, pendant lequel le dispositif marqueur communique avec le dispositif lecteur.

Grâce à ce type de sortie de veille, via un signal basses fréquences, il est ainsi possible de réveiller les dispositifs de suivi même lorsque ces dispositifs sont placés dans un environnement métallique. Les contraintes quant à l'alimentation peuvent être réduites, du fait de l'utilisation du mode veille et de la nécessité de communications courtes portées seulement. L'invention peut ainsi permettre d'attacher à chaque objet à suivre un dispositif marqueur de conception plus simple que le dispositif de suivi du document WO 2007/049011.

Le dispositif marqueur peut comprendre par exemple une radio-étiquette avec relativement peu de ressources, notamment en termes d'alimentation, de mémoire et de moyens de calcul.

Par « basses fréquences » on entend des fréquences inférieures à 500 kHz, avantageusement inférieures à 200 kHz, avantageusement supérieures à 9 kHz, avantageusement dans la bande 110-150 kHz. Le signal électrique basses fréquences peut ainsi avoir une fréquence de porteuse à 115 kHz par exemple.

On peut ainsi prévoir des moyens d'émission d'un signal radioélectrique basses fréquences pour réveiller les dispositifs marqueurs embarqués dans l'unité de transport.

Les moyens d'émission peuvent être intégrés dans le dispositif lecteur, ou non. On pourra en particulier prévoir un dispositif apte à générer des ondes électromagnétiques basses fréquences et commandé par le dispositif lecteur, ou bien encore par un serveur. Les moyens d'émission comprennent préférentiellement une antenne boucle magnétique, apte à privilégier un mode de propagation magnétique.

Par « courte portée », on entend des distances inférieures ou égales à la dizaine de mètres, et supérieures à la dizaine de centimètres.

L'alimentation peut comprendre une pile, une batterie rechargeable, ou autre. On pourra par exemple prévoir des piles fournissant une tension entre 0,6 et 6 V, avec une capacité entre 1 et 20 mA/h, par exemple une pile 3V, 10 mA/h.

La mémoire peut être par exemple une mémoire non volatile, programmable ou non. La taille de la mémoire peut être relativement limitée, par exemple entre 1 octets et 32 octets, par exemple de l'ordre de 16 octets.

Le dispositif lecteur peut communiquer avec les dispositifs marqueurs, et ainsi collecter les données de présence. Préférentiellement, le dispositif lecteur monté sur l'unité de transport communique directement avec les dispositifs marqueurs montés sur chaque objet à suivre. Autrement dit, le système de suivi repose sur un mode de communication directe (en « étoile », ou du type « maître-esclave ») entre le dispositif lecteur et les dispositifs marqueurs, sans qu'il soit besoin en outre que les dispositifs marqueurs communiquent entre eux pour relayer la propagation des signaux. Ce mode de mise en oeuvre permet avantageusement le déploiement d'une architecture simplifiée à deux niveaux seulement.

L'invention n'est en rien limitée par la nature des signaux échangés entre le dispositif lecteur et les dispositifs marqueurs.

Avantageusement, la ou les fréquences de porteuse des signaux échangés pour la collecte des données de présence peut être entre 1 MHz et 10 GHz.

On pourra par exemple prévoir des signaux ultra hautes fréquences, c'est-à-dire entre 300 et 3000 MHz, par exemple 433 MHz, dans la bande 860-956 MHz, à 915 MHz, ou bien encore dans la bande 865-868 MHz.

Alternativement, on pourra prévoir des signaux hautes fréquences, c'est-à-dire entre 3 MHz et 30 MHz, par exemple 13,56 MHz ou bien encore 27 MHz.

L'invention n'est en rien limitée par le protocole de communication mis en oeuvre entre le dispositif lecteur et les dispositifs marqueurs. On pourrait par exemple prévoir qu'une fois les dispositifs marqueurs sortis de l'état de veille, le dispositif lecteur se place dans un état d'écoute pour recueillir les différents identifiants des dispositifs marqueurs géographiquement proches.

Toutefois, dans un mode de réalisation avantageux, le dispositif lecteur peut être agencé pour générer des messages de requête, chaque message de requête comprenant un identifiant d'un objet correspondant, et chaque dispositif marqueur peut être agencé pour générer un message de présence suite à la réception d'un message de requête comprenant l'identifiant correspondant à ce dispositif marqueur. Ainsi, le dispositif lecteur interroge-t-il un dispositif marqueur particulier. Si ce dispositif est présent, le dispositif lecteur reçoit un message de présence. Le message de présence peut comprendre l'identifiant correspondant au dispositif marqueur ayant émis ce message, ou non.

Ce mode de réalisation peut permettre de limiter les collisions entre signaux émis par plusieurs dispositifs marqueurs relativement simultanément. En outre, cette interrogation peut ainsi être effectuée dans un temps déterminé et prédictible.

Les messages de requête peuvent être élaborés en fonction des données de présence attendues.

Ces données de présence attendues peuvent être fonction des données de localisation reçues. Par exemple, on peut programmer le dispositif lecteur en indiquant les chargements et déchargements attendus, avec par exemple des données de localisation de chaque quai de chargement/déchargement et des données quant aux objets chargés ou déchargés correspondant à chaque quai. Le dispositif lecteur peut être agencé pour lister les objets dont on s'attendrait à ce qu'ils soient présents pour les données de localisation reçues.

Avantageusement, le dispositif lecteur peut être agencé pour générer en outre un message d'interrogation destiné aux dispositifs marqueurs non concernés par les messages de requête, c'est-à-dire auxquels aucun message de requête n'a été adressé. Ainsi, après avoir appelé chaque dispositif marqueur attendu, le dispositif lecteur peut interroger les autres dispositifs marqueurs éventuellement présents, afin de recueillir des données de présence non attendues.

Le dispositif lecteur peut ainsi procéder en quelques sortes à un inventaire des objets embarqués dans l'unité de transport.

Avantageusement, chaque dispositif lecteur peut être agencé, pour en cas de réception d'un message d'interrogation, et si ce dispositif lecteur n'a pas récemment reçu un message de requête comprenant son identifiant, générer un message de présence après une durée aléatoire. Ceci peut permettre de limiter encore le risque de collision. Par exemple, le dispositif marqueur peut se placer dans un état d'attente pendant une durée déterminée aléatoirement, mais comprise entre un seuil minimum et un seuil maximum, puis, seulement après cette attente, émettre le message de présence.

Le dispositif de localisation peut par exemple comprendre une balise GPS (de l'anglais « Global Positionning System »), ou autre.

Le système de géolocalisation peut comprendre un système de géolocalisation par satellite, par GSM, ou autre.

Le dispositif lecteur, le dispositif de localisation, le dispositif de communication et les moyens de traitement peuvent avantageusement être intégrés dans un même appareil, par exemple un dispositif concentrateur comprenant un seul boitier logeant le dispositif lecteur, le dispositif de localisation et les moyens de traitement.

L'invention n'est toutefois pas limitée par cette intégration.

Par exemple, le dispositif lecteur peut transférer les données de présence collectées à des moyens de traitement, par exemple un processeur, d'un téléphone intelligent, ce téléphone étant par exemple confié au conducteur du camion. Ce téléphone peut intégrer le dispositif de localisation, et émettre un signal d'alarme si les données collectées ne correspondent pas aux données attendues.

Selon un autre exemple, le dispositif lecteur peut transférer les données de présence collectées à un serveur distant et le dispositif de localisation peut transférer vers ce serveur distant des données de localisation issues d'un système GPS. Le serveur distant comprend les moyens de traitement pour analyser les données de présence collectées et les données de localisation, et le cas échéant élaborer un signal d'alarme. Ce signal d'alarme peut par exemple être envoyé à un terminal du conducteur, par exemple un téléphone mobile, à un terminal installé au siège de l'entreprise de transport, par exemple un ordinateur d'un gestionnaire, ou autre.

Les moyens de communication sans fil courte portée du dispositif marqueur peuvent par exemple comprendre une antenne et des moyens de traitement en bande de base. Ces moyens de communication sans fil courte portée peuvent être alimentés par l'alimentation du dispositif marqueur.

Les moyens de communication sans fil courte portée du dispositif lecteur peuvent par exemple comprendre une antenne et des moyens de traitement en bande de base. Ces moyens de communication sans fil courte portée peuvent être alimentés par une batterie du dispositif marqueur.

Le dispositif marqueur peut par exemple comprendre un récepteur apte à sortir d'un mode d'économie d'énergie suite à la réception d'un signal radioélectrique basses fréquences, et un microcontrôleur en communication avec ce récepteur, apte à sortir d'un mode d'économie d'énergie suite à la réception d'un signal filaire issu du récepteur. Le réveil peut ainsi se dérouler en deux temps, via le récepteur, lequel transmet alors un signal de sortie de veille au microcontrôleur.

Le microcontrôleur et le récepteur peuvent être agencés de sorte qu'une fois le microcontrôleur ainsi placé en fonctionnement normal, le microcontrôleur pilote le récepteur.

Le récepteur peut avantageusement intégrer en outre les moyens de communication courte portée, ou bien être en communication avec une antenne, de sorte que l'information des signaux reçus par cette antenne est transmise au microcontrôleur et que le microcontrôleur commande l'émission de signaux radiofréquences par cette antenne.

Dans un autre mode de réalisation, le dispositif marqueur peut comprendre un seul composant, par exemple un ASIC (de l'anglais « Application-Specific Integrated Cirduit ») ou autre. Ce composant peut être conçu pour intégrer la sortie de mode d'économie d'énergie en cas de réception d'un signal radioélectrique basses fréquences, le stockage de l'identifiant, et les communications portée avec le dispositif lecteur.

On pourrait par exemple prévoir un composant en logique câblée, par exemple un FPGA (de l'anglais « Field Programmable Gate Array »).

Dans un mode de réalisation avantageux, le système peut comprendre en outre des capteurs. Les moyens de traitement peuvent être agencés pour prendre en compte en outre des données de mesure issues de ces capteurs, afin par exemple de pouvoir restituer un historique des températures, ou autre.

Les capteurs peuvent par exemple permettre de mesurer des données relatives aux vibrations subies, des températures, des données relatives à d'éventuels chocs subis, des données relatives à la luminosité, etc.

Dans un mode de réalisation avantageux, au moins un (et avantageusement chaque) dispositif marqueur comprend au moins un capteur et une mémoire additionnelle pour stocker des valeurs mesurées, par exemple de température, d'accélération, ou autre. Cette mémoire additionnelle peut avoir une taille comprise par exemple entre 1 ko et 1 Mo. Cette mémoire additionnelle et la mémoire stockant l'identifiant de l'objet à suivre correspondant peuvent être intégrées en une seule mémoire, ayant une taille comprise par exemple entre 1ko et 100 ko, ou non.

S'il s'avère qu'un objet recensé lors d'une collecte de données de présence n'est plus présent lors de la collecte suivante, les données de localisation correspondant à ces deux collectes peuvent fournir une information quant aux circonstances de la disparition de l'objet et aider à récupérer cet objet.

L'unité de transport peut par exemple comprendre un véhicule automobile, par exemple un camion, un support apte à être entrainé par un véhicule automobile, par exemple une remorque, un support apte à être embarqué, par exemple une palette, un conteneur, ou autre, un bateau, un avion, ou autre.

Il est en outre proposé un procédé de de suivi d'un jeu d'objets embarqués dans une unité de transport, comprenant
- commander l'émission d'un signal radioélectrique basses fréquences transmis suivant un mode de propagation magnétique pour sortir d'un mode d'économie d'énergie un jeu de dispositifs marqueurs, chaque dispositif marqueur étant monté sur un objet correspondant et comprenant une alimentation, une mémoire pour stocker un identifiant de cet objet, des moyens de communication sans fil courte portée pour transmettre des données de présence élaborées en fonction de l'identifiant,
- collecter les données de présence issues des moyens de communication sans fil courte portée des dispositifs marqueurs,
- recevoir des données de localisation de l'unité de transport issues d'un système de géolocalisation, par exemple un système de géolocalisation par satellite,
- générer des données de présence attendues en fonction des données de localisation reçues,
- comparer les données de présence attendue aux données de présence issues des dispositifs marqueurs et émettre un signal d'alarme selon le résultat de la comparaison.

Ce procédé peut être mis en oeuvre par un ou plusieurs dispositifs, mais avantageusement on pourra prévoir une implémentation dans un seul dispositif destiné à être monté sur l'unité de transport, dit concentrateur, en communication courte portée avec les dispositifs marqueurs et en communication longue portée avec un réseau de géolocalisation.

Ce procédé peut permettre d'attacher à chaque objet à suivre un dispositif marqueur relativement simple et peu coûteux, et donc d'assurer un suivi relativement précis d'un chargement.

Les réveils et les collectes peuvent être effectués plusieurs fois, pour assurer un suivi des objets tout au long du parcours. On pourra par exemple prévoir des réveils réguliers des dispositifs marqueurs, par exemple toutes les heures ou bien encore toutes les minutes.

Les dispositifs marqueurs peuvent comprendre des marqueurs RFID (de l'anglais « Radio Frequency Identification ») ou radio-étiquettes.

Ces radio-étiquettes peuvent présenter une face recouverte d'adhésif pour faciliter le montage sur les objets à suivre.

Il est en outre proposé un produit programme d'ordinateur comprenant des instructions pour effectuer les étapes du procédé décrit ci-dessus lorsque ces instructions sont exécutées par un processeur. Ce programme d'ordinateur peut être téléchargé, stocké dans un support du type disque dur ou autre, etc.

Il est en outre proposé un dispositif de suivi d'un jeu d'objets embarqués dans une unité de transport, comprenant des moyens de traitement agencés pour exécuter les étapes du procédé décrit ci-dessus. Ces moyens de traitement peuvent par exemple comprendre un processeur, par exemple un microprocesseur, un microcontrôleur, ou autre.

L'invention est maintenant décrite en référence aux dessins annexés, non limitatifs, dans lesquels :
- la figure 1 représente schématiquement un exemple de système selon un mode de réalisation de l'invention ;
- la figure 2 représente schématiquement un exemple de dispositif marqueur d'un système selon un mode de réalisation de l'invention ;
- la figure 3 représente schématiquement un exemple de dispositif concentrateur d'un système selon un mode de réalisation de l'invention ; et
- la figure 4 est un logigramme correspondant à un exemple de procédé selon un mode de réalisation de l'invention.

Des éléments similaires ou proches dans leur forme ou dans leur fonction peuvent être désignés par des références identiques d'une figure à l'autre.

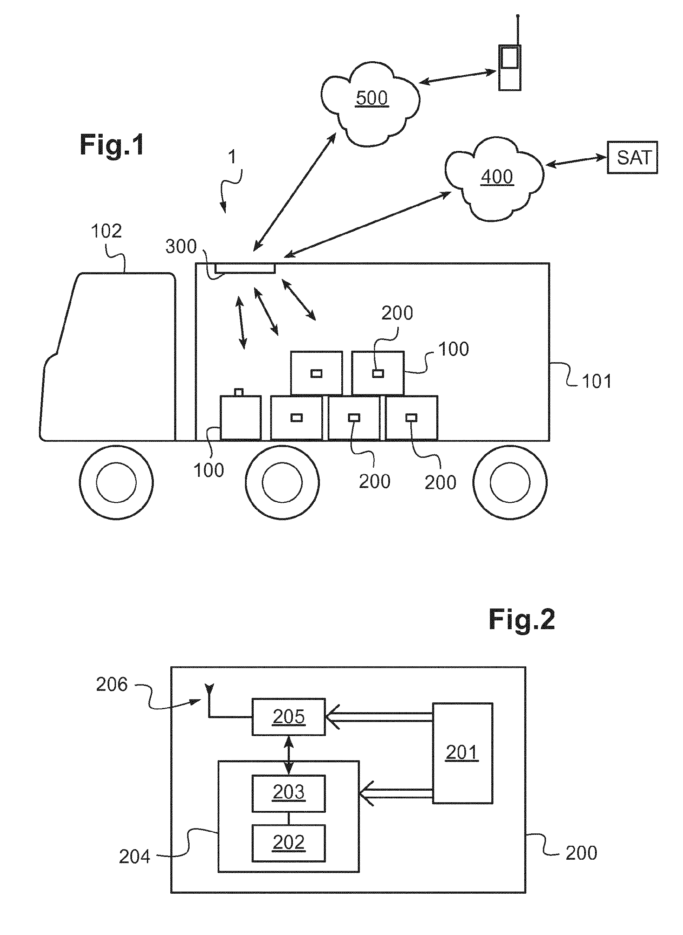

En référence à la figure 1, des objets 100, par exemple des imprimantes, sont embarqués dans une unité de transport, ici une remorque 101 attachée à un camion 102.

A chaque objet 100, on a attaché un dispositif marqueur 200, ici une radio-étiquette ou « tag » en anglais. La structure des radio-étiquettes est détaillée ci-après en référence à la figure 2.

En référence à cette figure 2, une radio-étiquette 200 comprend une alimentation, par exemple une batterie 201, une antenne courte portée 206, un récepteur 205 et un processeur, par exemple un microcontrôleur 204.

Le récepteur 205 et le microcontrôleur 204 sont alimentés en énergie par la batterie 201.

La batterie 201 peut par exemple fournir une tension de l'ordre de 3V et avoir une capacité de l'ordre de 10 mA/h.

Le microcontrôleur 204 comprend une mémoire 202, pour stocker notamment un identifiant de la radio-étiquette et donc de l'objet sur lequel cette radio-étiquette est monté.

Le microcontrôleur comprend en outre des moyens de traitement, ici un coeur de processeur 203, en communication avec la mémoire 202 et avec le récepteur 205.

Le récepteur 205 assure l'interface entre l'antenne 206 et le microcontrôleur 204, lequel fonctionne en bande de base. En outre, le récepteur est raccordé à une broche (non représentée) du microcontrôleur, cette broche étant raccordée à un système (non représenté) de sortie de veille du microcontrôleur. Dit autrement, le récepteur 205 est capable de réveiller le microcontrôleur 204.

Le récepteur 205 est en outre agencé pour passer d'un mode de veille à un mode de fonctionnement normal suite à la réception d'un signal radioélectrique basses fréquences, ayant par exemple une porteuse dans la bande 110-150 kHz. Le récepteur 205 peut par exemple comprendre un récepteur AS3932 commercialisé par la société AMS.

Ainsi, c'est l'ensemble de la radio-étiquette 200 qui peut passer d'un mode d'économie d'énergie à un mode de fonctionnement normal suite à la réception d'un signal basses fréquences.

Pour revenir à la figure 1, les radio-étiquettes 200 sont identiques dans leur structure et se différentient les unes des autres de part les données stockées dans leur mémoire.

L'identifiant peut par exemple comprendre un numéro d'unité de stockage constituée de N caractères identifiant un fournisseur ou un prestataire expédiant l'objet, suivis de N' caractères incrémentés correspondant à un identifiant individuel de cet objet. L'identifiant peut en particulier être généré conformément à la norme ISO/IEC 15963.

Eventuellement, l'identifiant peut comprendre en outre un numéro de bordereau de livraison, un numéro de commande client, et/ou autre.

Les radio-étiquettes 200 communiquent uniquement avec un dispositif concentrateur 300 monté sur la remorque 101. Les radio-étiquettes peuvent ainsi présenter des ressources relativement limitées.

Les radio-étiquettes 200 forment avec le dispositif concentrateur 300 un système de suivi 1 du jeu d'objets 100.

Le dispositif concentrateur 300 permet de collecter des données de présence issues des radio-étiquettes 200, et de confronter ces données à des données de présence attendues pour une localisation courante du camion 102. Cette localisation est obtenue via un réseau de géolocalisation GPS 400 comprenant des satellites, dont l'un SAT est représenté sur la figure 1.

Le dispositif concentrateur 300 communique en outre avec un réseau étendu WAN (de l'anglais « Wide Area Network »), par exemple un réseau de téléphonie 500, par exemple un réseau GSM (de l'anglais « Global System for mobile communications »), ou un réseau de communication satellitaire.

Si les données collectées ne correspondent pas aux données attendues, un signal d'alarme (non représenté) peut être émis vers ce réseau de téléphonie 500.

Le dispositif concentrateur 300 peut prendre en outre en compte des données de date, issues d'un réseau externe, d'une horloge interne, ou autre. Le dispositif concentrateur peut ainsi par exemple signaler un retard par rapport à une position attendue du camion.

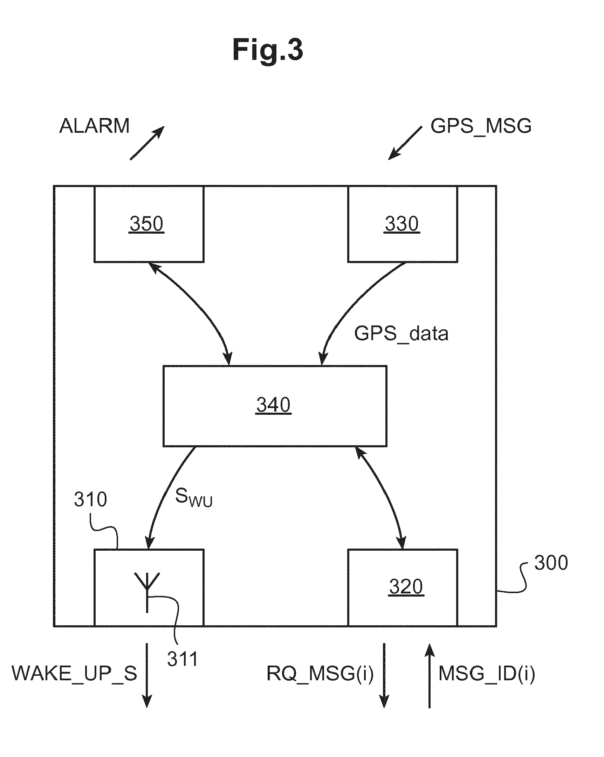

En référence à la figure 3, le dispositif concentrateur intègre dans un même boitier :
- un dispositif de réveil 310, comprenant des moyens d'émission d'un signal radioélectrique basses fréquences, par exemple une antenne 311, préférentiellement une antenne boucle magnétique, qui, en privilégiant un mode de propagation magnétique à un mode de propagation électrique, présente avantageusement une sensibilité moindre à un environnement métallique, ce qui peut s'avérer particulièrement avantageux lorsque les radio-étiquettes 200 à réveiller sont placées dans un tel environnement, comme c'est souvent le cas.
- un dispositif lecteur 320, chargé de la collecte des données de présence issues des radio-étiquettes 200,
- un dispositif de localisation 330, chargé de la réception de données de localisation du dispositif concentrateur 300,
- des moyens de traitement 340, par exemple un processeur, pour élaborer des données de présence attendues en fonction des données de localisation reçues et les confronter aux données de présence collectées par le dispositif lecteur 320,
- un dispositif de communication 350 avec un réseau sans fil, ici un réseau GSM, et
- une batterie non représentée pour alimenter ces différents dispositifs 310, 320, 330, 340, 350.

Le dispositif de réveil 310 peut être agencé pour émettre un signal radioélectrique ayant une fréquence de porteuse, de par exemple 120 kHz. Le dispositif de réveil 310 est commandé par le processeur 340.

Le processeur 340 commande également les communications hautes fréquences (HF) ou ultra hautes fréquences (UHF) avec les radio-étiquettes 200, par l'intermédiaire du dispositif lecteur 320. Le dispositif lecteur 320 peut comprendre des antennes non représentées ainsi que des moyens de traitement en bande de base non représentés, pour générer des signaux HF ou UHF destinés aux radio-étiquettes 200 et pour recevoir des signaux HF ou UHF émis par ces étiquettes.

Le processeur 340 reçoit en outre des données de localisation GPS_data issus du réseau GPS. Plus précisément, le dispositif de localisation 330 reçoit de ce réseau GPS des messages de géolocalisation GPS_MSG, extrait de ces messages des données de localisation et transfère au processeur 340 les données GPS_data. Ces données GPS_data peuvent comprendre une date ainsi que des coordonnées spatiales du camion.

Enfin, le processeur 340 communique avec le réseau étendu WAN par l'intermédiaire du dispositif de communication 350. Ce dispositif de communication 350 intègre une antenne non représentée, par exemple une antenne GSM et des moyens de traitement en bande de base non représentés. Le dispositif de communication 350 permet d'échanger des données avec le réseau WAN par une liaison radio longue portée bidirectionnelle et permet en particulier la transmission des données vers un serveur distant au format TCP/IP.

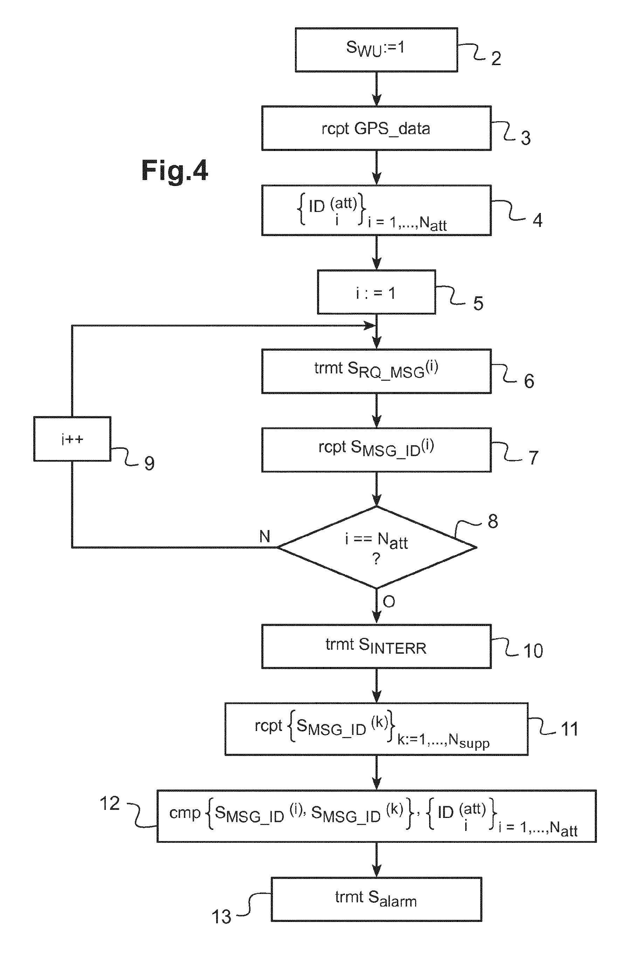

Le fonctionnement du processeur 340 est décrit de façon plus détaillée en référence à la figure 4.

Les étapes 2 à 13 de la figure 4 correspondent à un inventaire des objets présents dans une unité de transport. Cet inventaire peut être répété régulièrement, c'est-à-dire que ces étapes 2 à 13 peuvent être régulièrement réitérées, par exemple toutes les ½ heures. On pourrait par exemple prévoir une étape d'attente non représentée faisant suite à la dernière étape 13 et avant la répétition de la première étape 2.

Lors d'un inventaire, le processeur commande l'émission d'un signal radioélectrique basse fréquence lors d'une étape 2, par exemple en mettant à 1 une variable booléenne Swu.

Le dispositif de réveil 310, suite à ce passage à 1, émet pendant une durée prédéterminée, par exemple 5 millisecondes, un signal radioélectrique basse fréquence WAKE_UP_S. Ce signal radio électrique basse fréquence WAKE_UP_S est reçu par les radio-étiquettes 200 géographiquement proches du dispositif concentrateur 300, de sorte que ces radio- étiquettes sortent de l'état de veille.

Lors d'une étape 3, des données de localisation GPS_data sont reçues du dispositif de localisation 330. Ces données de localisation GPS_data peuvent par exemple comprendre des coordonnées spatiales du concentrateur 300.

Le procédé comprend en outre une étape 4 consistant à déterminer un ensemble d'identifiants d'objets attendus {IDᵢ^{(att)})} i-1...,Natt.

Ce données de présence attendues {IDᵢ^{(att)})} i=1...,Natt, sont déterminées en fonction des données de localisation reçues à l'étape 3. Par exemple, les données de localisation sont comparées à des coordonnées spatiales d'un parcours attendu et on identifie à partir de ces données un tronçon du parcours attendu courant. Les données de présence correspondent au tronçon de parcours courant. Par exemple, on peut avoir prévu qu'entre l'arrêt effectué à Tours et l'arrêt effectué à Orléans, la remorque contiendra tel ensemble d'objets, de sorte que si les données de localisation correspondent à un emplacement entre ces deux villes, les données de présence attendues correspondront à cet ensemble d'objets.

Une boucle est ensuite mise en place pour parcourir les différents objets attendus. Cette boucle, indicée i, comporte des étapes classiques d'initialisation 5, de test de sortie 8, et d'incrémentation 9.

Lors de l'exécution d'une boucle, le processeur 340 transmet au dispositif lecteur 330 un signal de commande de message de requête S_{RQ_MSG}(i), au cours d'une étape 6.

Lorsque le dispositif lecteur 320 reçoit ce signal de commande S_{RQ_MSG}(i), il génère un message de requête RQ_MSG(i) adressé à une radio-étiquette correspondant à cette valeur d'indice courante i.

Le processeur 340 se place alors dans un état d'écoute et si l'objet correspondant à la valeur i courante est effectivement présent, il reçoit un signal de présence S_{MSG_ID} (i), au cours d'une étape 7.

Ce signal de présence est généré par le dispositif lecteur 320 suite à la réception d'un message de présence MSG_ID(i) issu de la radio-étiquette portée par l'objet correspondant à cette valeur de l'indice i courante.

Si l'objet correspond à cet indice i interrogée est de fait absent, le dispositif lecteur 320 ne reçoit aucun message de présence. Au bout d'un laps de temps prédéterminé, si aucun message de présence n'est reçu, le dispositif 320 élabore un signal S_{MSG_ID}(i), indiquant l'absence de réponse suite à l'interrogation.

Lorsque le processeur 340 a ainsi interrogé chacune des Nₐₜₜ radio-étiquettes correspondant aux objets attendus, c'est-à-dire lorsque le test 8 est positif, alors le processeur 340 transmet au dispositif lecteur 320 un signal de commande de message d'interrogation S_{INTERR}, lors d'une étape 10.

Suite à la réception de ce signal S_{INTERR}, le dispositif de lecture 320 génère un message d'interrogation INTERR_MSG, destiné aux éventuelles radio-étiquettes auxquelles aucun message de requête RQ_MSG(i) n'a été adressé, suite au réveil par le signal radioélectrique basses fréquences WAKE_UP_S.

Si le camion transporte effectivement des objets non attendus et équipés d'une radio-étiquette réveillée, alors pour chaque radio-étiquette correspondant à un objet non attendu, le microcontrôleur de cette radio-étiquette calcule une valeur de durée aléatoire, par exemple comprise entre une milliseconde et une seconde, se place dans un état d'attente pendant cette durée ainsi calculée, puis transmet un message de présence MSG_ID(i) pour indiquer sa présence.

Pour chaque message de présence supplémentaire ainsi reçu, le dispositif lecteur 320 transmet un signal de présence supplémentaire S_{MSG_ID}(k). Dans cet exemple, des objets marqués non attendus sont présents et l'indice k varie entre 1 et une valeur Nₛᵤₚₚ supérieure ou égale à 1, correspondant au nombre d'objets marqués non attendus présents dans le véhicule.

Si le chargement effectif coïncide exactement avec le chargement attendu, c'est-à-dire qu'aucun objet supplémentaire n'est détecté, le dispositif 320 ne reçoit aucune réponse suite à l'émission du message d'interrogation INTERR_MSG. Le dispositif 320 élabore alors, après qu'un laps de temps raisonnable soit écoulé, un signal S_{MSG_ID}(1) indiquant qu'aucun objet supplémentaire n'a été détecté.

Les différentes données de présence ainsi collectées par le processeur 340 sont placées dans une mémoire tampon non représentée de ce processeur 340, puis confrontées aux données de présence attendues {IDᵢ^{(att)})}_{i=1...,Natt}.

Ces comparaisons peuvent être menées sur la base de comparaisons de listes d'identifiants et sont représentées sur la figure 4 par l'étape 12. S'il s'avère que les données de présence collectées diffèrent des données de présence attendues, un message d'alarme Sₐₗₐᵣₘ peut être transmis vers le dispositif de communication 350 afin que le conducteur et/ou l'entreprise de transport soient prévenus.

Le procédé décrit ci-dessus peut ainsi permettre d'avertir rapidement le conducteur et/ou l'entreprise de transport lorsqu'un objet est manquant, ou bien lorsqu'un objet est resté présent dans le véhicule alors qu'il aurait dû être livré.

## Revendications

1. Système de suivi (1) d'un jeu d'objets (100) embarqués dans une unité de transport (101), comprenant
un jeu de dispositifs marqueurs (200), chaque dispositif marqueur étant destiné à être monté sur un objet correspondant et comprenant une alimentation, une mémoire pour stocker un identifiant de cet objet, des moyens de communication sans fil courte portée pour transmettre des données de présence élaborées en fonction de l'identifiant, et dans lequel chaque dispositif marqueur est conçu pour sortir d'un mode d'économie d'énergie lorsque ledit dispositif marqueur reçoit un signal radioélectrique basses fréquences transmis suivant un mode de propagation magnétique, et
un dispositif lecteur (300), destiné à être monté sur l'unité de transport, ledit dispositif lecteur comprenant des moyens de communication sans fil courte portée pour recevoir les données de présence issues des dispositifs marqueurs, chaque dispositif marqueur (200) étant conçu pour communiquer uniquement avec le dispositif lecteur (300) ;
un dispositif de localisation (300), destiné à être monté sur l'unité de transport, comprenant des moyens de communication sans fil longue portée pour recevoir des données de localisation de l'unité de transport issues d'un système de géolocalisation,
un dispositif de communication sans fil longue portée avec un réseau étendu WAN, et
des moyens de traitement (300) en communication avec le dispositif lecteur, avec le dispositif de communication et avec le dispositif de localisation, agencés pour comparer des données de présence attendues, fonction des données de localisation reçues, aux données de présence issues des dispositifs marqueurs et pour émettre un signal d'alarme selon le résultat de la comparaison.

2. Système de suivi (1) selon la revendication 1, dans lequel le dispositif lecteur (320) est agencé pour générer des messages de requête (RQ_MSG(i)), chaque message de requête comprenant un identifiant d'un objet correspondant, et chaque dispositif marqueur est agencé pour générer un message de présence (MSG_ID(i)) suite à la réception d'un message de requête comprenant l'identifiant correspondant audit dispositif marqueur.

3. Système de suivi (1) selon la revendication 2, ledit système étant agencé pour que les messages de requête (RQ_MSG(i)) soient élaborés en fonction des données de présence attendues.

4. Système de suivi (1) selon l'une quelconque des revendications 2 ou 3, dans lequel le dispositif lecteur (320) est agencé pour générer en outre un message d'interrogation destiné aux éventuels dispositifs marqueurs auxquels aucun message de requête n'a été adressé suite au réveil par le signal radioélectrique basses fréquences.

5. Système de suivi (1) selon la revendication 4, dans lequel au moins un dispositif marqueur (200) est agencé pour, si aucun message de requête n'a été adressé audit dispositif marqueur suite au réveil par le signal radioélectrique basses fréquences et en cas de réception d'un message d'interrogation, générer un message de présence après une durée aléatoire.

6. Système de suivi (1) selon l'une quelconque des revendications 1 à 5, dans lequel le dispositif lecteur (320), le dispositif de localisation (330), le dispositif de communication (350) et les moyens de traitement (340) sont intégrés dans un même dispositif concentrateur (300) comprenant un seul boitier.

7. Système de suivi (1) selon l'une quelconque des revendications 1 à 6, dans lequel le dispositif marqueur comprend un récepteur (205) apte à sortir d'un mode d'économie d'énergie suite à la réception d'un signal radioélectrique basses fréquences, et un microcontrôleur (204) en communication avec ce récepteur, apte à sortir d'un mode d'économie d'énergie suite à la réception d'un signal filaire issu dudit récepteur.

8. Système de suivi (1) selon l'une quelconque des revendications 1 à 6, dans lequel le dispositif marqueur comprend un seul composant.

9. Procédé de de suivi d'un jeu d'objets embarqués dans une unité de transport, comprenant
- commander (2) l'émission d'un signal radioélectrique basses fréquences (WAKE_UP_S) transmis suivant un mode de propagation magnétique pour sortir d'un mode d'économie d'énergie un jeu de dispositifs marqueurs, chaque dispositif marqueur étant monté sur un objet correspondant et comprenant une alimentation, une mémoire pour stocker un identifiant de cet objet, des moyens de communication sans fil courte portée pour transmettre des données de présence élaborées en fonction de l'identifiant,
- collecter (7, 11) les données de présence issues des moyens de communication sans fil courte portée des dispositifs marqueurs,
- recevoir (3) des données de localisation (GPS_data) de l'unité de transport issues d'un système de géolocalisation,
- générer (4) des données de présence attendues en fonction des données de localisation reçues,
- comparer (12) les données de présence attendue aux données de présence issues des dispositifs marqueurs et émettre (13) un signal d'alarme (Sₐₗₐᵣₘ) selon le résultat de la comparaison.

10. Dispositif de suivi d'un jeu d'objets embarqués dans une unité de transport, comprenant des moyens de traitement agencés pour exécuter les étapes du procédé de la revendication 9.
